# EUROPÄISCHE PATENTSCHRIFT

(11) **EP 3 078 015 B1**
(45) Veröffentlichungstag und Bekanntmachung des Hinweises auf die Patenterteilung: **13.12.2017**
(21) Anmeldenummer: 14783610.0
(22) Anmeldetag: 10.10.2014
(51) Int. Cl.: G08G 1/16, H04N 13/02

(54) **VERFAHREN UND VORRICHTUNG ZUM ERZEUGEN EINER WARNUNG MITTELS ZWEIER DURCH KAMERAS ERFASSTER BILDER EINER FAHRZEUGUMGEBUNG**
METHOD AND DEVICE FOR GENERATING AN ALERT BY MEANS OF TWO IMAGES OF A VEHICLE ENVIRONMENT OBTAINED VIA CAMERAS
PROCÉDÉ ET DISPOSITIF DE GÉNÉRATION D'UNE ALERTE AU MOYEN DE DEUX IMAGES D'UN ENVIRONNEMENT DE VÉHICULE CAPTURÉES PAR DES CAMÉRAS

(30) Priorität: 05.12.2013 DE 102013224954
(43) Veröffentlichungstag der Anmeldung: 12.10.2016
(73) Patentinhaber: Robert Bosch GmbH, 70442 Stuttgart (DE)
(72) Erfinder: VEPA, Leo, 89079 Ulm (DE); HELMLE, Michael, 73732 Esslingen (DE); ESPARZA GARCIA, Jose Domingo, 70372 Stuttgart (DE)
(86) Internationale Anmeldenummer: PCT/EP2014/071721
(87) Internationale Veröffentlichungsnummer: WO 2015/082105

(56) Entgegenhaltungen:
- EP-A1- 1 696 669
- EP-A1- 2 062 778
- EP-A1- 2 555 520
- DE-B3-102011 080 702
- US-A1- 2007 291 130

## Beschreibung

### Stand der Technik

Die vorliegende Erfindung betrifft ein Verfahren und eine Vorrichtung zum Erzeugen einer Warnung mittels mindestens zweier durch Kameras erfasster Bilder einer Fahrzeugumgebung.

Fahrassistenzsysteme dienen der Unterstützung des Fahrers eines Kraftfahrzeuges. Diese Unterstützung kann auf verschiedene Weisen erfolgen. So ist es beispielsweise üblich, dem Fahrer eine Umgebung im nahe gelegenen Umfeld des Fahrzeuges anzuzeigen, die sonst nicht in einem Sichtfeld des Fahrers liegt, um Kollisionen zu vermeiden. Ferner sind Fahrassistenzsysteme bekannt, die dem Fahrer einige Steuerungsaktivitäten abnehmen, um eine Benutzerfreundlichkeit für den Fahrer zu erhöhen. Ebenso können Steuerungsaktivitäten des Fahrers überwacht werden und ein Eingriff durch das Fahrassistenzsystem im Falle einer gefährlichen Fahrsituation erfolgen. Des Weiteren sind Fahrassistenzsysteme bekannt, die eine autonome Bewegung des Fahrzeuges ohne einen Fahrer erlauben.

Kamerabasierte Fahrassistenzsysteme, die einen Abstand zu anderen Fahrzeugen oder Objekten erfassen können, nutzen Stereokamerapaare, die üblicherweise hinter einer Windschutzscheibe oder in einem Kofferraumdeckel untergebracht sind. Eine Stereokamera umfasst dabei zwei Kameras mit identischen optischen Eigenschaften. Diese Kameras sind derart zueinander ausgerichtet, dass diese parallel zueinander ausgerichtete optische Achsen und ein sehr enges Blickfeld haben. Dies ermöglicht eine hohe Weitsicht, wobei jedoch nur ein geringes Blickfeld abgedeckt wird. Aufgrund mehrerer Einflussfaktoren ist nicht mehr als ein Stereokamerapaar in einem einzigen Fahrzeug verbaut, wodurch deren Einsatzmöglichkeiten beschränkt werden.

In modernen Fahrzeugen kommt eine andere Art von Multi-Kamera-Systemen zum Einsatz, die aus mehr als zwei Kameras, üblicherweise mehr als vier Kameras, aufgebaut sind. Dabei haben die verwendeten Kameras einen großen Öffnungswinkel, in der Regel 180° Grad oder mehr. In diesen Multi-Kamera-Systemen wird ein Fahrzeugumfeld mittels mehrerer Weitwinkelkameras erfasst. Dabei soll durch ein Zusammenspiel der Weitwinkelkameras ein möglichst großes Blickfeld erfasst werden. Da in solchen Systemen eine Kamera im Frontbereich und eine Kamera im Heckbereich des Fahrzeuges existiert, gibt es Verfahren zum Abschätzen von Distanzen mittels einer Kamera (Mono-Kamera). Diese Verfahren umfassen Methoden wie z.B. die Zerlegung eines optischen Flusses, Klassifikatoren usw. Mit diesen Verfahren kann bei Kameras mit einem engen Blickfeld ein gutes Ergebnis erzielt werden.

Eine Vorrichtung zur Echtzeitsituationsdarstellung ist aus der EP1030188A1 bekannt. In dieser werden stereoskopische Bilder aus den Videoströmen von an einem Fahrzeug angeordneten Kameras erzeugt. Werden bestimmte Ereignisse erkannt, so kann eine Warnmeldung ausgegeben werden.

Die EP2062778A1 offenbart einen Spurwechselassistenten, bei dem in jedem der beiden Außenspiegel eines Fahrzeuges jeweils eine Kamera angeordnet ist, wobei die beiden Kameras einen gemeinsamen Überschneidungsbereich erfassen. Die US2007/0291130A1 offenbart ein Fahrzeug nach dem Oberbegriff des Anspruchs 1 sowie ein Verfahren nach dem Oberbegriff des Anspruchs 10.

### Offenbarung der Erfindung

Das erfindungsgemäße Fahrzeug mit einer Vorrichtung zum Erzeugen einer Warnung mit den Merkmalen des Anspruchs 1 umfasst eine erste Kamera zum Erfassen eines ersten Bildes aus einer Fahrzeugumgebung eines Fahrzeuges aus einer ersten Kameraperspektive, eine zweite Kamera zum Erfassen eines zweiten Bildes aus der Fahrzeugumgebung des Fahrzeuges aus einer zweiten Kameraperspektive, mindestens eine dritte Kamera zum Erfassen eines dritten Bildes aus der Fahrzeugumgebung des Fahrzeuges aus einer dritten Kameraperspektive, wobei die dritte Kamera als separate Kamera vorgesehen ist, wobei das erste Bild, das zweite Bild und das dritte Bild sich in einem ersten Überschneidungsbereich überschneiden, der einen ersten Bereich der Fahrzeugumgebung zeigt, und eine Warneinheit, die eingerichtet ist, eine Warnung auszugeben, falls eine Positionsinformation, welche eine Position eines Objektes oder eine zu erwartende Position des Objektes in Bezug auf das Fahrzeug ist, in einem vorgegebenen Warnbereich in Bezug auf das Fahrzeug liegt. Dabei sind die erste Kamera und die zweite Kamera separate, an Außenpositionen des Fahrzeuges angeordnete Kameras, die in Längsrichtung oder in Querrichtung des Fahrzeuges voneinander beabstandet angeordnet sind. Ferner ist eine Auswertungseinheit vorgesehen, die eingerichtet ist, die Positionsinformation in dem ersten Überschneidungsbereich basierend auf dem ersten Bild, dem zweiten Bild und dem dritten Bild zu bestimmen und an die Warneinheit weiterzuleiten. Eine Außenposition des Fahrzeuges ist dabei eine Position an dem Fahrzeug, die bei einer Draufsicht auf das Fahrzeug an einem Rand des Fahrzeuges liegt. Insbesondere werden die Positionsinformation in dem ersten Überschneidungsbereich basierend auf den Bildern der ersten und zweiten Kamera stereoskopisch bestimmt.

Das erfindungsgemäße Verfahren zum Erzeugen einer Warnung mit den Merkmalen des Anspruch 11, umfasst die Schritte eines Erfassen eines ersten Bildes aus einer Fahrzeugumgebung eines Fahrzeuges aus einer ersten Kameraperspektive durch eine erste Kamera, eines Erfassens eines zweiten Bildes aus der Fahrzeugumgebung des Fahrzeuges aus einer zweiten Kameraperspektive durch eine zweite Kamera und eines Erfassen mindestens eines dritten Bildes aus der Fahrzeugumgebung des Fahrzeuges aus einer dritten Kameraperspektive durch mindestens eine dritte Kamera, wobei die dritte Kamera als eine separate Kamera vorgesehen ist. Dabei sind die erste Kamera und die zweite Kamera zwei separate, an Außenpositionen des Fahrzeuges angeordnete Kameras, die in Längsrichtung oder in Querrichtung des Fahrzeuges voneinander beabstandet angeordnet sind, wobei das erste Bild, das zweite Bild und das dritte Bild sich in einem ersten Überschneidungsbereich überschneiden, der einen Bereich der Fahrzeugumgebung zeigt. Ferner umfasst das Verfahren einen Schritt des Bestimmens einer Positionsinformation, welche eine Position eines Objektes oder eine zu erwartende Position des Objektes in Bezug auf das Fahrzeug ist, in dem ersten Überschneidungsbereich basierend auf dem ersten Bild, dem zweiten Bild und dem dritten Bild erfolgt, und einen Schritt des Ausgebens einer Warnung, falls die Positionsinformation in einem vorgegebenen Warnbereich im Bezug auf das Fahrzeug liegt.

Die erfindungsgemäße Vorrichtung und das erfindungsgemäße Verfahren sind vorteilhaft, da diese eine zuverlässige Warnung auf der Basis sehr genauer Informationen über das Umfeld des Fahrzeuges, insbesondere bei einem großen Abstand des Objektes gegenüber dem Fahrzeug, ermöglichen. Zudem kann gegenüber herkömmlichen Stereokamerasystemen auf eine Anwendung von Klassifikatoren verzichtet werden. Das erfindungsgemäße Verfahren ist insbesondere vorteilhaft, da dieses ohne den Einsatz zusätzlicher Hardware von bestehenden Surround-View-Systemen ausgeführt werden kann. Das Verfahren ist somit ohne großen Aufwand in bereits bestehende Fahrzeuge integrierbar und kann insbesondere mit Monokameras ausgeführt werden.

Die Unteransprüche zeigen bevorzugte Weiterbildungen der Erfindung.

Insbesondere sind die erste und die zweite Kamera auf einer gemeinsamen, parallel zur Längsrichtung oder Querrichtung des Fahrzeuges ausgerichteten Linie angeordnet. Damit wird eine Verzerrung des ersten Bildes gegenüber dem zweiten Bild minimiert und somit ein Rechenaufwand beim Bestimmen der Positionsinformationen minimiert.

Es ist vorteilhaft, wenn die erste und die zweite Kamera mit einen maximalen Abstand zueinander an dem Fahrzeug angeordnet sind. Damit wird die Genauigkeit der Positionsinformation erhöht.

Des Weiteren ist es vorteilhaft, wenn mindestens eine dritte Kamera zum Erfassen eines dritten Bildes aus der Fahrzeugumgebung des Fahrzeuges aus einer dritten Kameraperspektive an dem Fahrzeug angeordnet ist, wobei die dritte Kamera als separate Kamera vorgesehen ist. Dabei überschneiden sich das erste Bild, das zweite Bild und das dritte Bild sich in einem zweiten Überschneidungsbereich. Die Auswertungseinheit ist dabei ferner dazu eingerichtet, die Positionsinformation in dem zweiten Überschneidungsbereich basierend auf dem ersten Bild, dem zweiten Bild und dem dritten Bild zu bestimmen. Auf diese Weise erfolgt eine Verbesserung der Präzision und der Stabilität der Positionsinformation, da diese somit auf zumindest drei Bildern beruhen. Insbesondere wird die Positionsinformation für den zweiten Überschneidungsbereich aus einer Kombination der Bilder der ersten und zweiten Kamera, der ersten und dritten Kamera sowie der zweiten und dritten Kamera bestimmt, um dann in einem Mittelwert zusammengeführt zu werden. Eine Triangulation beim Bestimmen der Positionsinformation basiert vorzugsweise auf einer Dreiecksberechnung mit mehreren Basen. Eine Basis ist dabei die Strecke zwischen zwei Kameras, deren Bilder für die Triangulation genutzt werden. Bevorzugt ist der Abstand der dritten Kamera zu der ersten und der zweiten Kamera ein maximal möglicher Abstand, der durch die Dimensionen des Fahrzeuges nach oben beschränkt ist.

Insbesondere umfasst die Vorrichtung ferner eine Auswahleinheit, die eingerichtet ist, eine aktuelle Fahrsituation zu erkennen und mindestens eine dritte Kamera auszuwählen, wenn eine vorgegebene Fahrsituation eintritt. Es ist bekannt, dass eine Auswertung von Stereobildern eine hohe Rechenleistung benötigt. Mit der Anzahl der einem Stereobild zugrundeliegenden Kamerabilder vervielfacht sich die benötigte Rechenleistung, wodurch jedoch die Genauigkeit der Positionsinformation ansteigt. Durch ein Auswählen einer oder mehrerer dritter Kameras in Abhängigkeit von einer aktuellen Fahrsituation wird das System an die aktuelle Fahrsituation angepasst. Es wird entweder die benötigte Rechenleistung minimiert oder die Genauigkeit maximiert.

Es ist vorteilhaft, wenn die erste und die zweite Kamera in oder an jeweils einem Außenspiegel des Fahrzeuges angeordnet sind, da diese Punkte an dem Fahrzeug typischerweise einen maximalen Abstand der ersten und der zweiten Kamera in Querrichtung ermöglichen. Zudem wird durch diese exponierte Position auf der Seite des Fahrzeuges ein großer Überschneidungsbereich ermöglicht, da eine minimale Verdeckung durch die Fahrzeugkarosserie erfolgt. Somit kann eine Positionsinformation in einem besonders großen Bereich in dem Fahrzeugumfeld bestimmt werden.

Ebenso vorteilhaft ist es, wenn die erste Kamera eine erste optische Achse und die zweite Kamera eine zweite optische Achse aufweist, wobei die erste und die zweite optische Achse in unterschiedliche Richtungen zeigen, und die Auswertungseinheit dazu eingerichtet ist, eine erste virtuellen Kameraperspektive für die erste Kamera durch eine erste virtuelle optische Achse zu definieren, die sich in ihrer Lage von der ersten optischen Achse unterscheidet und eine zweite virtuellen Kameraperspektive für die zweite Kamera durch eine zweite virtuelle optische Achse zu definieren, die sich in ihrer Lage von der zweiten optischen Achse unterscheidet. Ferner ist die Auswertungseinheit dabei dazu eingerichtet, ein erstes virtuelles Bild des ersten Überschneidungsbereichs in der ersten virtuellen Kameraperspektive aus dem ersten Bild zu berechnen und ein zweites virtuelles Bild des ersten Überschneidungsbereichs in der zweiten virtuellen Kameraperspektive aus dem zweiten Bild zu berechnen. Des Weiteren ist die Auswertungseinheit dabei dazu eingerichtet, eine Korrespondenzanalyse zum Herstellen eines Bezugs, insbesondere eines räumlichen Bezugs, zwischen einem Objekt in dem erzeugten virtuellen ersten Bild und in dem erzeugten virtuellen zweiten Bild durchzuführen, wobei das Bestimmen der Positionsinformation in dem ersten Überschneidungsbereich basierend auf der Korrespondenzanalyse, dem erzeugten ersten virtuellem Bild und dem erzeugten zweiten virtuellem Bild sowie der Position der ersten Kamera in Bezug auf die zweite Kamera erfolgt. Durch diese Verfahrensschritte wird die Positionsinformation besonders zuverlässig ermittelt. Insbesondere bei unterschiedlich gerichteten optischen Achsen, was eine besonders vorteilhafte und flexible Anordnung der Kameras ermöglicht, wird durch eine solche Auswertungseinheit ein Bestimmen der Positionsinformation bei minimalem Rechenaufwand ermöglicht.

Insbesondere ist die Auswertungseinheit dazu eingerichtet ist, die Positionsinformation mit den Ergebnissen von anderen Objektpositionserfassungseinrichtungen zu ergänzen oder zu kombinieren. Somit wird die Positionsinformation in einigen Bereichen verifiziert oder präzisiert. Bei entsprechend angeordneten Objektpositionserfassungseinrichtungen wird die Positionsinformation derart erweitert, dass diese auch eine aktuelle Position von Objekten außerhalb des Überschneidungsbereichs umfasst.

Weiterhin ist es vorteilhaft, wenn die Auswertungseinheit dazu eingerichtet ist, eine Relativgeschwindigkeit des Objektes in Bezug auf das Fahrzeug aus einer Folge von ermittelten Positionen des Objektes zu errechnen und insbesondere eine zu erwartende Position des Objekts mittels der Relativgeschwindigkeit zu extrapolieren. Auf diese Weise wird eine Warnung insbesondere dann ausgegeben werden, wenn eine Kollision zwischen dem Objekt und dem Fahrzeug zu erwarten ist. Bevorzugt wird eine Warnung unterdrückt, wenn die Relativgeschwindigkeit auf ein Entfernen des Objektes von dem Fahrzeug hindeutet. Somit werden unnötige Warnungen eines Fahrers vermieden. Eine genauere Einschätzung von Gefahrensituationen wird ermöglicht. So kann beispielsweise ermittelt werden, ob ein sich näherndes Objekt mit dem Fahrzeug kollidiert, oder sich an diesem vorbei bewegt.

Weiterhin ist es vorteilhaft, wenn die Warnung eine Auffahrwarnung ist, wobei der vorgegebene Warnbereich hinter oder vor dem Fahrzeug liegt. Es erfolgt somit eine Warnung vor Auffahrunfällen wodurch diese vermieden werden können. Ebenso können weitere Sicherheitssysteme wie z.B. ein Notbremsassistent aktiviert werden. Eine Auffahrwarnung kann dabei eine Warnung sein, die vor einem Auffahren des Fahrzeuges auf ein vor dem Fahrzeug befindlichem Objekt warnt, oder eine Warnung, die vor einem bevorstehenden Auffahren eines Objektes auf das Fahrzeug warnt.

Ebenso ist es vorteilhaft, wenn die Warnung eine Tote-Winkel-Warnung ist, wobei der vorgegebene Warnbereich in einem toten Winkel des Fahrzeuges liegt. Der tote Winkel ist ein Bereich neben dem Fahrzeug, der von einem Fahrer des Fahrzeuges nicht über die Außenspiegel eingesehen werden kann und nicht in seinem frontalen Blickfeld liegt. Durch eine solche Warnung können Unfälle vermieden werden.

Ebenso ist es vorteilhaft, wenn die Warnung eine Seitenkollisionswarnung ist, wobei der vorgegebene Warnbereich seitlich neben dem Fahrzeug liegt. Durch eine solche Warnung können Unfälle vermieden werden. Es ist vorteilhaft, wenn durch eine solche Warnung auch Sicherheitssysteme wie z.B. ein Seitenairbag aktiviert werden.

Des Weiteren ist eine Verwendung eines Systems zur zumindest teilweisen optischen Erfassung eines Fahrzeugumfeldes eines Fahrzeuges mit einer ersten Kamera zum Erfassen eines ersten Bildes einer Fahrzeugumgebung aus einer ersten Kameraperspektive und mit einer zweiten Kamera mit einer zweiten optischen Achse zum Erfassen eines zweiten Bildes einer Fahrzeugumgebung aus einer zweiten Kameraperspektive zur Durchführung des erfindungsgemäßen Verfahrens vorteilhaft. Dabei sind die erste Kamera und die zweite Kamera zwei separate, an Außenpositionen des Fahrzeuges angeordnete Kameras, die in Längsrichtung oder in Querrichtung des Fahrzeuges voneinander beabstandet angeordnet sind, wobei das erste und das zweite Bild sich in einem ersten Überschneidungsbereich überschneiden, der einen Bereich der Fahrzeugumgebung zeigt. Damit ergibt sich die Möglichkeit ein bereits bestehendes Fahrzeugsystem um eine Warnfunktion zu erweitern die auf sonst nicht genutzten Messdaten beruht, und somit Warnmeldungen in Situationen ausgeben kann, die sonst nicht erkannt werden können.

Insbesondere sind zumindest die erste und die zweite Kamera Weitwinkelkameras. Dadurch werden der erste und/oder der zweite Überschneidungsbereich erweitert und Objekte können zuverlässiger erfasst werden. Zudem kann in die Anzahl der benötigten Kameras reduziert werden. Insbesondere werden in dem ersten Überschneidungsbereich zwei Fahrzeugumgebungsbereiche abgebildet, die auf gegenüberliegenden Seiten des Fahrzeuges liegen. Damit wird die Anzahl der Kameras, die für eine Erfassung der Fahrzeugumgebungsbereiche von Interesse benötigt wird, verringert und somit eine Kostenersparnis erzielt.

Weiterhin ist es vorteilhaft, wenn die erste Kamera, die zweite Kamera und die dritte Kamera auf einer gemeinsamen parallel zur Querrichtung oder parallel zur Längsrichtung des Fahrzeuges ausgerichteten Linie angeordnet sind. Damit wird eine Verzerrung des ersten Bildes gegenüber dem zweiten Bild und dem dritten Bild minimiert und somit ein Rechenaufwand beim Bestimmen der Positionsinformationen minimiert.

### Kurze Beschreibung der Zeichnungen

Nachfolgend werden Ausführungsbeispiele der Erfindung unter Bezugnahme auf die begleitende Zeichnung im Detail beschrieben. In der Zeichnung ist:
- Figur 1: eine schematische Ansicht eines Fahrzeug mit einer Vorrichtung zum Erzeugen einer Warnung gemäß einer Ausführungsform,
- Figur 2: eine schematische Ansicht einer Vorrichtung zum Erzeugen einer Warnung gemäß einer Ausführungsform,
- Figur 3: eine schematische Ansicht eines Fahrzeuges mit einer Vorrichtung zum Erzeugen einer Warnung gemäß einer Ausführungsform, in einer beispielhaften Verkehrssituation, und
- Figur 4: ein Ablaufdiagram des Verfahrens gemäß einer Ausführungsform.

### Ausführungsformen der Erfindung

Das erfindungsgemäße Verfahren wird bevorzugt durch ein Fahrassistenzsystem ausgeführt, das einen Rundumblick um ein Fahrzeug 10 mittels mehrerer Kameras 1R, 1L, 1H, 1F erfasst und darstellt. Dabei wird ein Nutzen daraus gezogen, dass die von solchen Kameras 1R, 1L, 1H, 1F erfassten Bilder einen erheblichen Überschneidungsbereich aufweisen, in dem ein Bereich neben dem Fahrzeug aus unterschiedlichen Kameraperspektiven dargestellt wird.

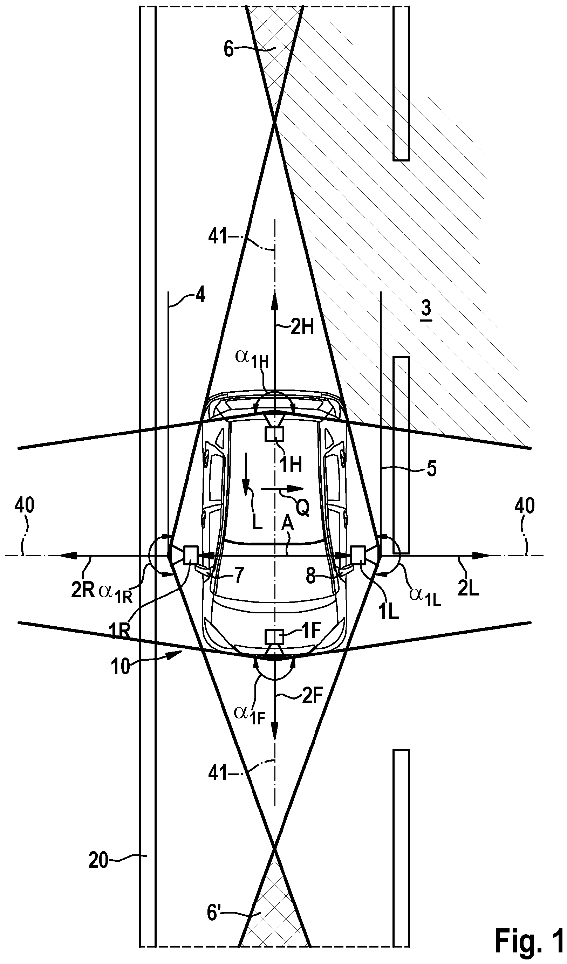

Ein Fahrzeug 10 mit einer Vorrichtung zum Erzeugen einer Warnung gemäß einer Ausführungsform ist in Figur 1 gezeigt.

In einem rechten Außenspiegel 7 des Fahrzeuges 10, und somit an einer Außenposition des Fahrzeuges 10, ist eine erste Kamera 1R angebracht. Die erste Kamera 1R ist eine Weitwinkelkamera. Diese erste Kamera 1R hat eine erste optische Achse 2R, welche parallel zu der Fahrbahnoberfläche 20 und in einem rechten Winkel nach rechts gegenüber einer Längsrichtung L des Fahrzeuges 10 gerichtet ist. Diese erste optische Achse 2R ist die optische Achse einer Linse der erste Kamera 1R und liegt somit im Zentrum eines von der erste Kamera 1R erfassten ersten Bildes. Die erste Kamera 1R hat einen Erfassungswinkel α_{1R} von 200° Grad. Das bedeutet, dass ein Objekt durch die erste Kamera 1R erfasst wird, wenn es sich in einem sichtbaren Bereich vor der Linse der erste Kamera 1R befindet, der sich von der ersten Kamera 1R aus gesehen in einer Blickrichtung befindet, die nicht weiter als 100° von der ersten optischen Achse 2R der ersten Kamera 1R in eine beliebige Richtung abweicht.

In einem linken Außenspiegel 8 des Fahrzeuges 10, und somit an einer Außenposition des Fahrzeuges 10, ist eine zweite Kamera 1L angebracht. Die zweite Kamera 1L ist eine Weitwinkelkamera. Diese zweite Kamera 1L hat eine zweite optische Achse 2L, welche parallel zu der Fahrbahnoberfläche 20 und in einem rechten Winkel nach links gegenüber der Längsrichtung L des Fahrzeuges 10 gerichtet ist. Diese zweite optische Achse 2L ist die optische Achse einer Linse der zweiten Kamera 1L und liegt somit im Zentrum eines von der zweiten Kamera 1L erfassten zweiten Bildes. Die zweite Kamera 1L hat einen Erfassungswinkel α_{1L} von 200° Grad. Das bedeutet, dass ein Objekt durch die zweiten Kamera 1L erkannt wird, wenn es sich in einem sichtbaren Bereich vor der Linse der zweiten Kamera 1L befindet, der sich von der zweiten Kamera 1L aus gesehen in einer Blickrichtung befindet, die nicht weiter als 100° von der zweiten optischen Achse 2L der zweiten Kamera 1L in eine beliebige Richtung abweicht.

Hinter einer Heckscheibe ist eine dritte Kamera 1H im Heckbereich des Fahrzeuges 10 angebracht. Die dritte Kamera 1H ist eine Weitwinkelkamera. Diese dritte Kamera 1H hat eine dritte optische Achse 2H, welche parallel zu der Fahrbahnoberfläche 20 und entlang der Längsrichtung L des Fahrzeuges 10 nach hinten gerichtet ist. Diese dritte optische Achse 2H ist die optische Achse einer Linse der dritten Kamera 1H und liegt somit im Zentrum eines von der dritten Kamera 1H erfassten dritten Bildes. Die dritte Kamera 1H hat einen Erfassungswinkel α_{1H} von 200° Grad. Das bedeutet, dass ein Objekt durch die dritte Kamera 1H erkannt wird, wenn es sich in einem sichtbaren Bereich vor der Linse der dritten Kamera 1H befindet, der sich von der dritten Kamera 1H aus gesehen in einer Blickrichtung befindet, die nicht weiter als 100° von der dritten optischen Achse 2H der dritten Kamera 1H in eine beliebige Richtung abweicht.

An der Fahrzeugfront des Fahrzeuges 10 ist eine vierte Kamera 1F angebracht. Die vierte Kamera 1F ist eine Weitwinkelkamera. Diese vierte Kamera 1F hat eine vierte optische Achse 2F, welche parallel zu einer Fahrbahnoberfläche 20 und entlang der Längsrichtung L des Fahrzeuges 10 nach vorne gerichtet ist. Diese vierte optische Achse 2F ist die optische Achse einer Linse der vierten Kamera 1F und liegt somit im Zentrum eines von der vierten Kamera 1F erfassten vorderen Bildes. Die vierte Kamera 1F hat einen ersten Erfassungswinkel α_{1F} von 200° Grad. Das bedeutet, dass ein Objekt durch die vierte Kamera 1F erfasst wird, wenn es sich in einem sichtbaren Bereich vor der Linse der vierten Kamera 1F befindet, der sich von der vierten Kamera 1F aus gesehen in einer Blickrichtung befindet, die nicht weiter als 100° von der vierten optischen Achse 2F der zweiten zusätzliche Kamera 1F in eine beliebige Richtung abweicht.

Bei dem Objekt kann es sich um einen Gegenstand, wie z.B. eine Fahrzeug, oder eine Person handeln. Optische Linsen solcher zuvor beschriebener Weitwinkelkameras werden auch als Fischaugenlinse bezeichnet.

Die erste Kamera 1R, die zweite Kamera 1L, die dritte Kamera 1H und die vierte Kamera 1F sind separate Kameras. Das bedeutet, dass jede diese Kameras eine von den anderen Kameras unabhängige Baugruppe ist. Die erste und die zweite Kamera 1R, 1L sind in einer Querrichtung Q des Fahrzeuges voneinander beabstandet angeordnet und sind dabei auf einer gemeinsamen, parallel zur Querrichtung Q ausgerichtet Linie 40 angeordnet. Dabei haben die erste Kamera 1R und die zweite Kamera 1L, unter Berücksichtigung dieser Anordnung auf einer parallel zur Querrichtung Q ausgerichtet Linie 40, einen maximalen Abstand A zueinander, der einer maximalen Breite des Fahrzeuges 10 entspricht. Dabei kann es zu einbaubedingten Abweichungen von der maximalen Fahrzeugbreite kommen, die z.B. durch Gehäuseteile verursacht sein können oder dadurch, dass die Blickfelder der ersten und zweiten Kamera 1R, 1L nicht durch andere Komponenten des Fahrzeuges 10 verdeckt werden sollen.

Die erste und die zweiten Kamera 1R, 1L erfassen einen ersten Überschneidungsbereich 6, 6', der aus einem vor dem Fahrzeug 10 liegenden vorderen Überschneidungsbereich 6' und einem hinter dem Fahrzeug 10 liegenden hinteren Überschneidungsbereich 6 gebildet wird. Die erste Kamera 1R, die zweite Kamera 1L und die dritte Kamera 1H erfassen einen zweiten Überschneidungsbereich, der dem hinteren Überschneidungsbereich 6 entspricht. Die erste Kamera 1R, die zweite Kamera 1L und die vierte Kamera 1F erfassen einen zweiten Überschneidungsbereich, der dem vorderen Überschneidungsbereich 6' entspricht.

In anderen, hier nicht beschriebenen Ausführungsformen kann der Erfassungswinkel α_{1R}, α_{1L}, α_{1H}, α_{1F} der Kameras 1L, 1R, 1H, 1F von den zuvor beschriebenen Erfassungswinkeln α_{1R}, α_{1L}, α_{1H}, α_{1F} abweichen. So ist beispielsweise ein Erfassungswinkel von 180° vorteilhaft. Insbesondere haben die Kameras 1L, 1R, 1H, 1F unterschiedliche Erfassungswinkel α_{1R}, α_{1L}, α_{1H}, α_{1F}. Es ist ebenso möglich, die erste optische Achse der ersten Kamera 1R und die zweite optische Achse der zweiten Kamera 1L um einen Winkel von mehr oder weniger als 90° entgegen der Längsrichtung L des Fahrzeuges 10 angestellt vorzusehen. Damit kann der erste Überschneidungsbereich 6, 6' vor oder hinter dem Fahrzeug 10 vergrößert bzw. verkleinert werden, bzw. der erster Überschneidungsbereich 6; 6' geschaffen werden.

In der hier beschriebenen Ausführungsform sind die optischen Achsen der ersten Kamera 1R, der zweiten Kamera 1L, der ersten dritten Kamera 1H und der vierten Kamera 1F parallel zu der Fahrbahnoberfläche 20 gerichtet. In anderen Ausführungsformen können diese jedoch auch in einem anderen Winkel gegenüber der Fahrbahnoberfläche 20 stehen.

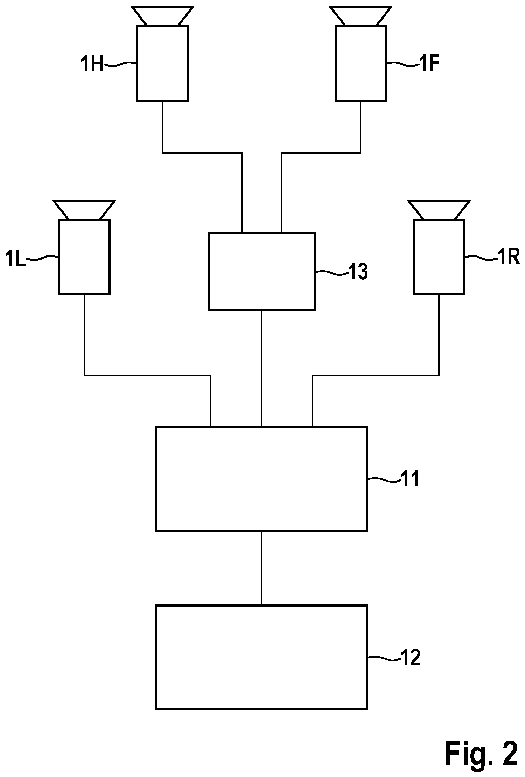

Wie aus Figur 2 ersichtlich, umfasst die die Vorrichtung zum Erzeugen einer Warnung gemäß einer Ausführungsform ferner eine Auswertungseinheit 11. Die Auswertungseinheit 11 ist derart mit der ersten Kamera 1R und der zweiten Kamera 1L gekoppelt, dass das erste und das zweite Bild von der ersten Kamera 1R und der zweiten Kamera 1L an die Auswertungseinheit 11 übertragen wird. Die Auswertungseinheit 11 ist eingerichtet, eine Positionsinformation, welche eine Position des Objektes oder eine zu erwartende Position des Objektes in Bezug auf das Fahrzeug 10 ist, in dem ersten Überschneidungsbereich 6, 6' basierend auf den Bildern der ersten Kamera 1R und der zweiten Kamera 1L zu bestimmen und an eine Warneinheit 12 weiterzuleiten. Die Positionsinformation für ein Objekt in dem ersten Überschneidungsbereich 6, 6' wird basierend auf den Bildern der ersten und zweiten Kamera 1L, 1R bestimmt. Dazu erfolgt eine stereoskopische Auswertung des ersten und des zweiten Bildes. Dabei wird in dieser Ausführungsform jedem in dem ersten Bild dargestellten Bildpunkt ein korrespondierender Bildpunkt in dem zweiten Bild zugewiesen, der einen identischen Punkt der Fahrzeugumgebung abbildet. Dabei kann ein solcher Bildpunkt insbesondere durch das Objekt definiert sein, wenn dieses sich in dem ersten Überschneidungsbereich 6, 6' befindet. Auf Basis der zugrundeliegenden Kameraparameter, wie z.B. der Pixelgröße, kann jedem Bildpunkt eine Richtung in Bezug zu der ersten Kamera 1R und eine Richtung in Bezug zu der zweiten Kamera 1L zugeordnet werden. Da der Abstand A zwischen der ersten Kamera 1R und der zweiten Kamera 1L bekannt ist, sowie die Anordnung der ersten und der zweiten Kamera 1R, 1L an dem Fahrzeug 10 bekannt ist, kann eine Position des Bildpunktes und somit des Objektes gegenüber dem Fahrzeug 10 mittels einer Triangulation ermittelt werden. Diese Position eines Objektes in Bezug auf das Fahrzeug 10 wird als eine Positionsinformation an eine Warneinheit 12 weitergeleitet.

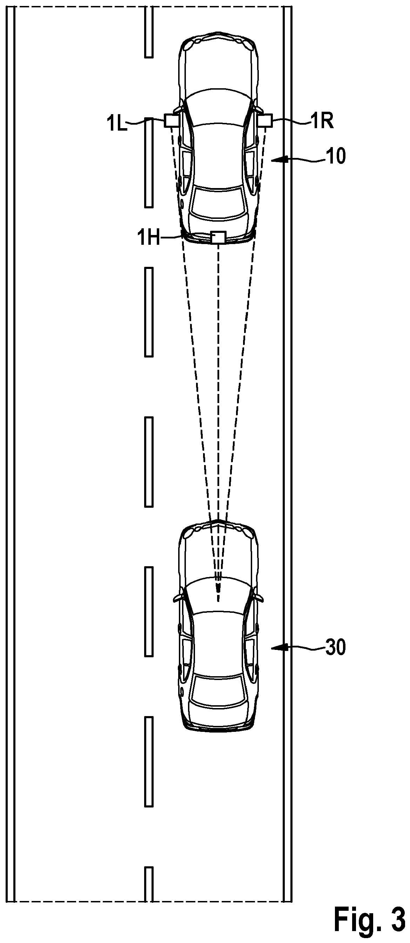

Die Genauigkeit beim Bestimmen der Positionsinformation wird erhöht, wenn mittels der dritten Kamera 1H oder der vierten Kamera 1F eine Triangulation mit mehreren Ausgangspunkten erfolgt. Ein Beispiel dafür ist in Figur 3 gezeigt. Ein zweites Fahrzeug 30 wird durch die erste Kamera 1R, die zweite Kamera 1L und die dritte Kamera 1H erfasst. Insbesondere in Systemen mit mehr als vier Weitwinkelkameras kann ein Bereich sogar durch mehr als drei Kameras dargestellt werden.

In dieser Ausführungsform umfasst die Vorrichtung zum Erzeugen einer Warnung eine Auswahleinheit 13, die eingerichtet ist, eine aktuelle Fahrsituation zu erkennen und die dritte Kamera 1H oder die vierte Kamera 1F auszuwählen, wenn eine vorgegebene Fahrsituation eintritt. Das dritte und/oder das vierte Bild werden somit nur dann zum Bestimmen der Positionsinformation genutzt, wenn eine vorgegebene Fahrsituation eintritt. Dazu ist die Auswahleinheit 13 zwischen die dritte und vierte Kamera 1H, 1F und die Auswertungseinheit 11 geschaltet. Das dritte und das vierte Bild werden der Auswertungseinheit 11 nur dann bereitgestellt, wenn eine der vorgegebenen Fahrsituationen eintritt. Optional ist die Auswahleinheit 13 von der Auswertungseinheit 11 umfasst. Zum Erkennen einer aktuellen Fahrsituation können vorzugsweise die Sensordaten aller an dem Fahrzeug 10 befindlichen Sensoren durch die Auswahleinheit 13 genutzt werden. Beispiele für Fahrsituationen sind beispielsweise ein Ein- oder Ausparkvorgang, ein Bremsvorgang oder eine Notbremsung, eine Beschleunigung des Fahrzeuges, eine Lenkvorgang etc. Eine Notbremsung könnte beispielsweise anhand der Informationen eines Sensors an einem Bremspedal erfolgen.

In einer Notbremssituation wird beispielsweise die vierte Kamera 1F ausgewählt werden. Da in diesem Falle der vordere Überschneidungsbereich 6' durch die Bilder der ersten Kamera 1R, der zweiten Kamera 1L und der vierten Kamera 1F erfasst wird, erfolgt eine präzise Bestimmung der Positionsinformation wenn das Objekt in dem vorderen Überschneidungsbereich sichtbar ist. Da in diesem Falle der hintere Überschneidungsbereich 6 lediglich durch die erste Kamera und die zweite 1R Kamera 1L erfasst wird, erfolgt für das Objekt, falls es in dem hinteren Überschneidungsbereich sichtbar ist, eine weniger genaue aber weniger rechenintensive Bestimmung der Positionsinformation. Ebenso könnte eine Auswahl der dritten Kamera 1H oder vierten Kamera 1F abhängig von einer Fahrtrichtung des Fahrzeuges 10 sein.

Alternativ können die Bilder aller Kameras zu jeder Zeit ausgewertet werden.

Erfolgt das Bestimmen der Positionsinformation in dem hinteren Überschneidungsbereich basierend auf dem ersten Bild, dem zweiten Bild und dem dritten Bild so werden mehrere temporäre Positionsinformationen für ein Objekt aus jeweils zwei der Bilder ermittelt. Dies erfolgt entsprechend dem zuvor beschriebenen Bestimmen der Positionsinformation aus dem ersten und dem zweiten Bild. Eine resultierende Positionsinformation wird durch einen Mittelwert gebildet. Selbiges gilt, wenn das Bestimmen der Positionsinformation in dem vorderen Überschneidungsbereich basierend auf dem ersten Bild, dem zweiten Bild und dem vierten Bild erfolgt.

Optional umfasst die Positionsinformation eine zu erwartende Position des Objektes in Bezug auf das Fahrzeug 10. In diesem Falle werden von der Auswertungseinheit 11, basierend auf einer zeitlichen Abfolge mehrerer Positionen des Objektes, ein Bewegungsvektor und/oder eine Relativgeschwindigkeit des Objektes in Bezug auf das Fahrzeug 10 ermittelt. Eine zu erwartende Position des Objekts wird mittels des Bewegungsvektors und/oder der Relativgeschwindigkeit des Objektes in Bezug auf das Fahrzeug 10 extrapoliert.

Ebenfalls optional ist die Auswertungseinheit 11 dazu eingerichtet ist, die Positionsinformation mit den Ergebnissen von anderen Objektpositionserfassungseinrichtungen zu ergänzen oder zu kombinieren. So könnten z.B. die Abstandsinformationen durch Ultraschall-Abstandssensoren, wie sie z.B. in Parkhilfesystemen verwendet werden, verifiziert werden, sobald das Objekt sich in deren Reichweite befindet. Somit kann die Positionsinformation für ein Objekt auch in einem Bereich außerhalb des ersten Überschneidungsbereichs 6, 6' bestimmt werden.

Die Vorrichtung zum Erzeugen einer Warnung gemäß der Ausführungsform umfasst ferner die Warneinheit 12. Die Warneinheit 12 ist eingerichtet, eine Warnung auszugeben, falls eine von der Auswertungseinheit 11 bezogene Positionsinformation in einem vorgegebenen Warnbereich im Bezug auf das Fahrzeug 10 liegt. Der Warnbereich ist ein vordefinierter Bereich im Umfeld des Fahrzeuges 10. In der hier beschriebenen Ausführungsform der Erfindung sind mehrere Warnbereiche definiert. Eine Warnung kann in einem regulären Verkehrsfluss, z.B. bei einer aktiven Annäherung des Objektes an das Fahrzeug 10, oder in Rangiersituationen (z.B. einem Einparkvorgang) erfolgen, also z.B. bei einer aktiven Annäherung des Fahrzeugs 10 an das Objekt.

Ein erster Warnbereich ist hinter dem Fahrzeug 10 definiert. Dieser Warnbereich schließt an das Heck des Fahrzeuges 10 an, und erstreckt sich über eine gegebene Ausdehnung rückwärtig von dem Fahrzeug 10 weg. Die Ausdehnung dieses ersten Warnbereiches kann entweder fest gewählt sein, oder sich mit einer Fahrtgeschwindigkeit des Fahrzeuges 10 ändern. Tritt ein Objekt in diesen ersten Warnbereich ein, so wird eine Heck-Auffahrwarnung ausgegeben. Eine Warnung kann dabei unterdrückt werden, wenn das Objekt sich in dem ersten Warnbereich befindet, aber die Relativgeschwindigkeit des Objekts auf ein sich Entfernen des Objekts von dem Fahrzeug 10 schließen lässt.

Ein zweiter Warnbereich ist vor dem Fahrzeug 10 definiert. Dieser Warnbereich schließt an die Front des Fahrzeuges 10 an, und erstreckt sich vorwärts über eine gegebene Ausdehnung von dem Fahrzeug 10 weg. Die Ausdehnung dieses zweiten Warnbereiches kann entweder fest gewählt sein, oder sich mit einer Fahrtgeschwindigkeit des Fahrzeuges 10 ändern. Tritt ein Objekt in diesen ersten Warnbereich ein, so wird eine Front-Auffahrwarnung ausgegeben. Eine Warnung kann dabei unterdrückt werden, wenn das Objekt sich in dem zweiten Warnbereich befindet, aber die Relativgeschwindigkeit des Objekts auf eine Entfernung von dem Fahrzeug 10 schließen lässt.

Ein dritter Warnbereich ist jeweils in einem toten Winkel des Fahrzeuges 10 definiert. Der tote Winkel ist ein Bereich neben dem Fahrzeug 10, der von einem Fahrzeugführer nicht über die Außenspiegel eingesehen werden kann und nicht in seinem frontalen Blickfeld liegt. Tritt ein Objekt in diesen dritten Warnbereich ein, so wird eine Tote-Winkel-Warnung ausgegeben.

Ein vierter Warnbereich ist beidseitig neben dem Fahrzeug 10 definiert. Dieser Warnbereich schließt an die jeweilige Seite des Fahrzeuges 10 an, und erstreckt sich über eine gegebene Ausdehnung seitwärts von dem Fahrzeug 10 weg. Tritt ein Objekt in diesen vierten Warnbereich ein, so wird eine Seitenkollisionswarnung ausgegeben. Eine Warnung kann dabei unterdrückt werden, wenn das Objekt sich in dem vierten Warnbereich befindet, aber die Relativgeschwindigkeit des Objekts auf eine Entfernung von dem Fahrzeug 10 schließen lässt. Ein derartiger vierter Warnbereich kann, insbesondere in einer Kombination mit dem dritten Warnbereich, auch genutzt werden, um eine Warnung vor überholenden Fremdfahrzeugen auszugeben.

Die Warneinheit 12 gemäß der Ausführungsform umfasst ferner eine Signalisierungseinrichtung zum Ausgeben einer Warnung, falls die Position des Objektes oder eine zu erwartende Position des Objektes in einem vorgegebenen Warnbereich im Bezug auf das Fahrzeug 10 liegt. Eine solche Signalisierungseinrichtung kann dabei eine optische oder akustische Vorrichtung wie z.B. ein Lautsprecher, eine Lampe oder ein Display sein, die geeignet ist, einen Fahrer des Fahrzeuges 10 zu warnen. Ebenso kann die Signalisierungseinrichtung eine Einrichtung sein, die ein elektrisches Signal an eine weitere in dem Fahrzeug 10 befindliche Vorrichtung weiterleiten kann. Somit könnte beispielsweise ein Sicherheitssystem, wie z.B. ein Airbag oder ein Notbremsassistent aktiviert werden.

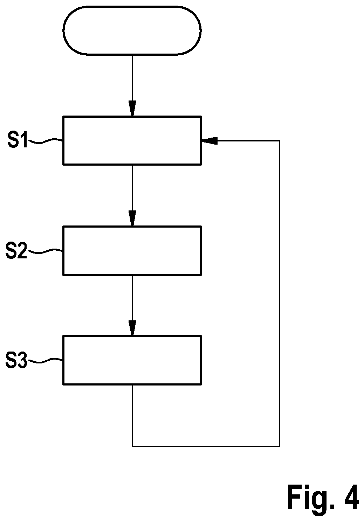

Figur 4 zeigt ein Ablaufdiagramm des erfindungsgemäßen Verfahrens in einer Ausführungsform. Das Verfahren wird durch ein Fahrassistenzsystem ausgeführt dessen Kameras entsprechend der zuvor beschriebenen Vorrichtung angeordnet sind. Das Verfahren wird gestartet, wenn das Fahrassistenzsystem in Betrieb genommen wird, und wird fortlaufend wiederholt, bis eine Abbruchbedingung erfüllt ist, oder die Vorrichtung außer Betrieb genommen wird. Eine Abbruchbedingung könnte z.B. durch eine Anwendereingabe gegeben sein.

In einem ersten Verfahrensschritt S1 erfolgt ein Erfassen eines ersten Bildes einer Fahrzeugumgebung des Fahrzeuges 10 aus der ersten Kameraperspektive durch die erste Kamera 1R, ein Erfassen eines zweiten Bildes der Fahrzeugumgebung aus der zweiten Kameraperspektive durch die zweite Kamera 1L, ein Erfassen eines dritten Bildes der Fahrzeugumgebung aus der dritten Kameraperspektive durch die dritte Kamera 1H und ein Erfassen eines vierten Bildes der Fahrzeugumgebung aus der vierten Kameraperspektive durch die vierte Kamera 1H. Das erste, zweite, dritte und vierte Bild wird zeitgleich erfasst, wodurch die Bilder einen Ausschnitt der Fahrzeugumgebung zum selben Zeitpunkt zeigen. Dadurch können Fehler durch Objektbewegungen minimiert werden.

In einem zweiten Verfahrensschritt S2, der auf den ersten Verfahrensschritt S1 folgt, erfolgt ein Bestimmen einer Positionsinformation, welche eine Position eines Objektes oder eine zu erwartende Position des Objektes in Bezug auf das Fahrzeug 10 ist, in dem hinteren Überschneidungsbereich 6 basierend auf den Bildern der ersten Kamera 1R, der zweiten Kamera 1L und der dritten Kamera 1H. Des Weiteren erfolgt ein Bestimmen einer Positionsinformation in dem vorderen Überschneidungsbereich 6' basierend auf den Bildern der ersten Kamera 1R, der zweiten Kamera 1L und der vierten Kamera 1F.

Das Bestimmen der Positionsinformation in dem zweiten Verfahrensschritt S2 kann beispielsweise entsprechend der zuvor beschriebenen Vorrichtung erfolgen. Das Bestimmen der Positionsinformation in dem zweiten Verfahrensschritt S2 umfasst des Weiteren auch eine Auswertung aller möglicher Kombinationen von Bildern der ersten, zweiten, dritten und vierten Kamera 1R, 1L, 1F, 1H, die einen gemeinsamen Überschneidungsbereich aufweisen. Beispielsweise wird ein hinterer linker Überschneidungsbereich 3 durch das zweite Bild der zweiten Kamera und durch das dritte Bild der dritten Kamera 1H abgebildet. Entsprechend wird aus dem zweiten und dem dritten Bild die Positionsinformation von einem Objekt in Bezug auf das Fahrzeug 10 bestimmt, wenn das Objekt sich in dem hinteren linken Überschneidungsbereich 3 befindet.

In einem dritten Verfahrensschritt S3, der auf den zweiten Verfahrensschritt S2 folgt, erfolgt ein Ausgeben einer Warnung, falls die Positionsinformation in einem vorgegebenen Warnbereich im Bezug auf das Fahrzeug 10 liegt.

Nach der Durchführung des dritten Verfahrensschrittes S3 verzweigt das Verfahren zurück auf den ersten Verfahrensschritt S1. Das Verfahren wird durchgeführt, bis eine Abbruchbedingung gegeben ist. Eine solche Abbruchbedingung kann eine Anwendereingabe sein, oder durch eine Deaktivierung des Fahrassistenzsystems gegeben sein.

In allen Ausführungsformen der Erfindung, insbesondere wenn die Kameras 1R, 1L, 1H, 1F Weitwinkelkameras mit unterschiedlich ausgerichteten optischen Achsen 2R, 2L, 2H, 2F sind, ist es vorteilhaft, wenn die folgenden optionalen Verfahrensschritte vor dem Bestimmen der Positionsinformation in dem zweiten Verfahrensschritt S2 durchgeführt werden. Diese sind anhand der Bilder der ersten und der zweiten Kamera 1R, 1L beschrieben, werden aber bei einer Kombination beliebiger Bilder, die einen gemeinsamen Überschneidungsbereich aufweisen angewendet.

In einem ersten optionalen Verfahrensschritt wird eine erste virtuelle Kameraperspektive für die erste Kamera 1R durch eine erste virtuelle optische Achse 4 definiert, die sich in ihrer Lage von der ersten optischen Achse 2R unterscheidet und eine zweite virtuelle Kameraperspektive für die zweite Kamera 1L durch eine zweite virtuelle optische Achse 5 definiert, die sich in ihrer Lage von der zweiten optischen Achse 2L unterscheidet. Die erste virtuelle optische Achse 4 entsteht durch eine virtuelle Rotation der ersten optischen Achse 2R um ein optisches Zentrum der ersten Kamera 1R. Die zweite virtuelle optische Achse 5 entsteht durch eine virtuelle Rotation der zweiten optischen Achse 2L um ein optisches Zentrum der zweiten Kamera 1L. Dabei erfolgt die virtuelle Rotation derart, dass die erste virtuelle optische Achse 4 und die zweite virtuelle optische Achse 5 parallel zueinander angeordnet werden.

In einem zweiten optionalen Verfahrensschritt, der auf den ersten optionalen Verfahrensschritt folgt, wird ein erstes virtuelles Bild des ersten Überschneidungsbereichs 6, 6' in der ersten virtuellen Kameraperspektive aus dem ersten Bild berechnet. Dabei wird der durch das erste Bild widergegebene erste Überschneidungsbereich 6, 6' entzerrt. Diese Entzerrung umfasst dabei eine Korrektur von Verzerrungen, die durch die optischen Eigenschaften der Weitwinkellinse verursacht werden. Eine solche Entzerrung könnte z.B. durch eine Koordinatenkonversion erfolgen die auf einer vorhergegangenen Kalibrierung der ersten Kamera 1R basiert. Des Weiteren wird ein zweites virtuelles Bild des ersten Überschneidungsbereichs in der zweiten virtuellen Kameraperspektive aus dem zweiten Bild berechnet. Dabei wird der durch das zweite Bild widergegebene erste Überschneidungsbereich 6, 6' entzerrt. Diese Entzerrung umfasst dabei eine Korrektur von Verzerrungen, die durch die optischen Eigenschaften der Weitwinkellinse verursacht werden. Eine solche Entzerrung könnte z.B. durch eine Koordinatenkonversion erfolgen die auf einer vorhergegangenen Kalibrierung der zweiten Kamera 1L basiert.

Es ist vorteilhaft, wenn dabei auch eine epipolare Entzerrung der virtuellen Bilder erfolgt. Dabei werden die virtuellen Bilder, die aus den unterschiedlichen virtuellen Kameraperspektiven berechnet wurden auf eine gemeinsame Ebene abgebildet und hinsichtlich ihrer Größe und Orientierung identisch ausgerichtet. Nach dieser epipolaren Entzerrung sind die einzelnen Pixelreihen der beiden virtuellen Bilder identisch ausgerichtet, so dass einander entsprechende Objektpunkte auf einer horizontalen Linie liegen.

Als Ergebnis des zweiten optionalen Verfahrensschrittes liegen epipolar entzerrte virtuelle Bilder vor, die den ersten Überschneidungsbereich aus zwei unterschiedlichen virtuellen Kameraperspektiven zeigen.

Im Rahmen eines dritten optionalen Verfahrensschrittes werden diese virtuellen Bilder zueinander in Bezug gesetzt. Es erfolgt das Durchführen einer Korrespondenzanalyse zum Herstellen eines Bezugs, insbesondere eines räumlichen Bezugs, zwischen einem Objekt in dem erzeugten virtuellen ersten Bild und in dem erzeugten virtuellen zweiten Bild.

Da die erste Kameras 1R und die zweite Kamera 1L in einem Außenbereich des Fahrzeuges 10 angeordnet sind, sind diese Störeinflüssen wie z.B. Temperaturschwankungen oder Vibrationen ausgesetzt. Dadurch können die durch die Kameras aufgenommenen Bilder zusätzliche Verzerrungen aufweisen, die eine perfekte epipolare Entzerrung unmöglich machen und dadurch die Korrespondenzanalyse erschweren. Um das Durchführen der Korrespondenzanalyse zu erleichtern werden bevorzugt Algorithmen zur Korrespondenzanalyse verwendet, die einen erweiterten Suchradius für korrespondierende Objekte aufweisen. Solche Algorithmen, in denen beispielsweise der optische Fluss berücksichtigt wird, ermöglichen, dass die einander entsprechenden Objektpunkte nicht zwangsläufig auf einer horizontalen Linie liegen müssen, sondern auch bei einer vertikalen Abweichung zueinander gefunden werden können.

In dem zweiten Verfahrensschritt S2, der auf den dritten optionalen Verfahrensschritt folgt, erfolgt das Bestimmen der Positionsinformation in dem ersten Überschneidungsbereich basierend auf der Korrespondenzanalyse, dem erzeugten erstem virtuellem Bild und dem erzeugten zweiten virtuellem Bild sowie der Position der ersten Kamera 1R in Bezug auf die zweite Kamera 1L. Aus der Korrespondenzanalyse ist für jeden Objektpunkt in dem ersten virtuellen Bild ein zugehöriger Objektpunkt in dem zweiten virtuellen Bild bekannt. Auf Basis der zugrundeliegenden Kameraparameter, wie z.B. der Pixelgröße, kann jedem Objektpunkt eine Richtung in Bezug zu der ersten Kamera 1R und eine Richtung in Bezug zu der zweiten Kamera 1L zugeordnet werden. Da der Abstand A zwischen der ersten Kamera 1R und der zweiten Kamera 1L bekannt ist sowie die Anordnung der ersten und der zweiten Kamera 1R, 1L an dem Fahrzeug 10 bekannt ist, kann eine Position bzw. ein Abstand eines Objektpunktes und somit eines Objektes gegenüber dem Fahrzeug 10 mittels einer Triangulation ermittelt werden.

In weiteren Ausführungsformen der Erfindung ist die erste Kamera 1R am Heck des Fahrzeuges 10 angeordnet und die zweite Kamera 1L an der Front des Fahrzeuges angeordnet, wobei die optische Achse 2R der ersten Kamera 1R in Längsrichtung L des Fahrzeuges 10 nach hinten gerichtet ist und die optische Achse 2L der zweiten Kamera 1L in Längsrichtung des Fahrzeuges 10 nach vorne gerichtet ist.

## Patentansprüche

1. Fahrzeug mit einer Vorrichtung zum Erzeugen einer Warnung, umfassend:
- eine erste Kamera (1R) zum Erfassen eines ersten Bildes aus einer Fahrzeugumgebung eines Fahrzeuges (10) aus einer ersten Kameraperspektive,
- eine zweite Kamera (1L) zum Erfassen eines zweiten Bildes aus der Fahrzeugumgebung des Fahrzeuges (10) aus einer zweiten Kameraperspektive,
- mindestens eine dritte Kamera (1H, 1F) zum Erfassen eines dritten Bildes aus der Fahrzeugumgebung des Fahrzeuges (10) aus einer dritten Kameraperspektive, wobei die dritte Kamera (1H, 1F) als separate Kamera vorgesehen ist,
- wobei das erste Bild, das zweite Bild und das dritte Bild sich in einem ersten Überschneidungsbereich (6, 6') überschneiden, und
- eine Warneinheit (12), die eingerichtet ist, eine Warnung auszugeben, falls eine Positionsinformation, welche eine Position eines Objektes oder eine zu erwartende Position des Objektes in Bezug auf das Fahrzeug (10) ist, in einem vorgegebenen Warnbereich im Bezug auf das Fahrzeug (10) liegt, und
- die erste Kamera (1R) und die zweite Kamera (1L) separate, an Außenpositionen des Fahrzeuges (10) angeordnete Kameras sind, die in Längsrichtung oder in Querrichtung des Fahrzeuges (10) voneinander beabstandet angeordnet sind,
**dadurch gekennzeichnet, dass**
- eine Auswertungseinheit (11) vorgesehen ist, die eingerichtet ist, die Positionsinformation in dem ersten Überschneidungsbereich basierend auf dem ersten Bild, dem zweiten Bild und dem dritten Bild zu bestimmen und an die Warneinheit weiterzuleiten.

2. Vorrichtung nach einem der vorhergehenden Ansprüche, **dadurch gekennzeichnet, dass** die erste und die zweite Kamera (1L, 1R) auf einer gemeinsamen, parallel zur Längsrichtung (L) oder Querrichtung (Q) des Fahrzeuges (10) ausgerichteten Linie (40, 41) angeordnet sind.

3. Vorrichtung nach Anspruch 2, **dadurch gekennzeichnet, dass** die erste und die zweite Kamera (1L,1R) einen maximalen Abstand zueinander haben.

4. Vorrichtung nach Anspruch 1, **dadurch gekennzeichnet, dass** die Vorrichtung ferner eine Auswahleinheit (13) umfasst, die eingerichtet ist, eine aktuelle Fahrsituation zu erkennen und mindestens eine dritte Kamera (1H, 1F) auszuwählen, wenn eine vorgegebene Fahrsituation eintritt.

5. Vorrichtung nach einem der vorhergehenden Ansprüche, **dadurch gekennzeichnet, dass** die erste und die zweite Kamera (1R, 1L) in jeweils einem Außenspiegel (7, 8) des Fahrzeuges (10) angeordnet sind.

6. Vorrichtung nach einem der vorhergehenden Ansprüche, **dadurch gekennzeichnet, dass** die erste Kamera (1R) eine erste optische Achse (2R) und die zweite Kamera (1L) eine zweite optische Achse (2L) aufweist, wobei die erste und die zweite optische Achse (2R, 2L) in unterschiedliche Richtungen zeigen, und die Auswertungseinheit dazu eingerichtet ist:
- eine erste virtuellen Kameraperspektive für die erste Kamera (1R) durch eine erste virtuelle optische Achse (4) zu definieren, die sich in ihrer Lage von der ersten optischen Achse (2R) unterscheidet und eine zweite virtuellen Kameraperspektive für die zweite Kamera (1L) durch eine zweite virtuelle optische Achse (5) zu definieren, die sich in ihrer Lage von der zweiten optischen Achse (2L) unterscheidet,
- ein erstes virtuelles Bild des ersten Überschneidungsbereichs (6, 6') in der ersten virtuellen Kameraperspektive aus dem ersten Bild zu berechnen und ein zweites virtuelles Bild des ersten Überschneidungsbereichs (6, 6') in der zweiten virtuellen Kameraperspektive aus dem zweiten Bild zu berechnen, und
- eine Korrespondenzanalyse zum Herstellen eines Bezugs, insbesondere eines räumlichen Bezugs, zwischen einem Objekt in dem erzeugten virtuellen ersten Bild und in dem erzeugten virtuellen zweiten Bild durchzuführen,
- wobei das Bestimmen der Positionsinformation in dem ersten Überschneidungsbereich (6, 6') basierend auf der Korrespondenzanalyse, dem erzeugten ersten virtuellem Bild und dem erzeugten zweiten virtuellem Bild sowie der Position der ersten Kamera (1R) in Bezug auf die zweite Kamera (1L) erfolgt.

7. Vorrichtung nach einem der vorangehenden Ansprüche, **dadurch gekennzeichnet, dass** die Auswertungseinheit dazu eingerichtet ist, die bestimmte Positionsinformation mit den Ergebnissen von anderen Objektpositionserfassungseinrichtungen zu ergänzen oder zu kombinieren.

8. Vorrichtung nach einem der vorangehenden Ansprüche, **dadurch gekennzeichnet, dass** die Auswertungseinheit (11) dazu eingerichtet ist, eine Relativgeschwindigkeit des Objektes in Bezug auf das Fahrzeug (10) aus einer Folge von ermittelten Positionen des Objektes zu errechnen und insbesondere eine zu erwartende Position des Objekts mittels der Relativgeschwindigkeit zu extrapolieren.

9. Vorrichtung nach einem der vorangehenden Ansprüche, **dadurch gekennzeichnet, dass** die Warnung
- eine Auffahrwarnung ist, wobei der vorgegebene Warnbereich hinter oder vor dem Fahrzeug (10) liegt, und/oder
- eine Tote-Winkel-Warnung ist, wobei der vorgegebene Warnbereich in einem toten Winkel des Fahrzeuges (10) liegt, und/oder
- eine Seitenkollisionswarnung ist, wobei der vorgegebene Warnbereich seitlich neben dem Fahrzeug (10) liegt.

10. Verfahren zum Erzeugen einer Warnung, umfassend die Schritte:
- Erfassen eines ersten Bildes aus einer Fahrzeugumgebung eines Fahrzeuges (10) aus einer ersten Kameraperspektive durch eine erste Kamera (1R),
- Erfassen eines zweiten Bildes aus der Fahrzeugumgebung des Fahrzeuges (10) aus einer zweiten Kameraperspektive durch eine zweite Kamera (1L),
- Erfassen mindestens eines dritten Bildes aus der Fahrzeugumgebung des Fahrzeuges (10) aus einer dritten Kameraperspektive durch mindestens eine dritte Kamera (1H, 1F), wobei die dritte Kamera (1H, 1F) als eine separate Kamera vorgesehen ist
- wobei die erste Kamera (1R) und die zweite Kamera (1 L) zwei separate, an Außenpositionen des Fahrzeuges (10) angeordnete Kameras sind, die in Längsrichtung (L) oder in Querrichtung (Q) des Fahrzeuges (10) voneinander beabstandet angeordnet sind,
- wobei das erste Bild, das zweite Bild und das dritte Bild sich in einem ersten Überschneidungsbereich (6, 6') überschneiden,
- Bestimmen einer Positionsinformation, welche eine Position eines Objektes oder eine zu erwartende Position des Objektes in Bezug auf das Fahrzeug (10) ist, in dem ersten Überschneidungsbereich (6, 6'), und
- Ausgeben einer Warnung, falls die Positionsinformation in einem vorgegebenen Warnbereich im Bezug auf das Fahrzeug (10) liegt,
**dadurch gekennzeichnet, dass**
- das Bestimmen der Positionsinformation basierend auf dem ersten Bild, dem zweiten Bild und dem dritten Bild erfolgt.

## Claims

1. Vehicle having an apparatus for producing a warning, comprising:
- a first camera (1R) for capturing a first image of a vehicle environment of a vehicle (10) from a first camera perspective,
- a second camera (1L) for capturing a second image of the vehicle environment of the vehicle (10) from a second camera perspective,
- at least one third camera (1H, 1F) for capturing a third image of the vehicle environment of the vehicle (10) from a third camera perspective, wherein the third camera (1H, 1F) is provided as a separate camera,
- wherein the first image, the second image and the third image overlap in a first overlap region (6, 6'), and
- a warning unit (12), which is set up to emit a warning if position information, which is a position of an object or is an expected position of the object in relation to the vehicle (10), is within a specified warning region in relation to the vehicle (10), and
- the first camera (1R) and the second camera (1L) are separate cameras which are arranged at external positions of the vehicle (10) at a distance from one another in the longitudinal direction or transverse direction of the vehicle (10),
**characterized in that**
- an evaluation unit (11) is provided, which is set up to determine the position information in the first overlap region based on the first image, the second image and the third image and to transmit it to the warning unit.

2. Apparatus according to one of the preceding claims, **characterized in that** the first and the second camera (1L, 1R) are arranged on a common line (40, 41) that is aligned parallel with respect to the longitudinal direction (L) or the transverse direction (Q) of the vehicle (10).

3. Apparatus according to Claim 2, **characterized in that** the first and the second camera (1L, 1R) have a maximum distance between them.

4. Apparatus according to Claim 1, **characterized in that** the apparatus furthermore comprises a selection unit (13), which is set up to recognize a current driving situation and to select at least one third camera (1H, 1F) if a specified driving situation occurs.

5. Apparatus according to one of the preceding claims, **characterized in that** the first and the second camera (1R, 1L) are arranged in each case in an exterior mirror (7, 8) of the vehicle (10).

6. Apparatus according to one of the preceding claims, **characterized in that** the first camera (1R) has a first optical axis (2R), and the second camera (1L) has a second optical axis (2L), wherein the first and the second optical axis (2R, 2L) point in different directions, and the evaluation unit is set up for:
- defining a first virtual camera perspective for the first camera (1R) by a first virtual optical axis (4) which differs in terms of its orientation from the first optical axis (2R) and defining a second virtual camera perspective for the second camera (1L) by a second virtual optical axis (5) which differs in terms of its orientation from the second optical axis (2L),
- calculating a first virtual image of the first overlap region (6, 6') in the first virtual camera perspective from the first image and calculating a second virtual image of the first overlap region (6, 6') in the second virtual camera perspective from the second image, and
- performing a correspondence analysis for establishing a relationship, in particular a spatial relationship, between an object in the produced virtual first image and in the produced virtual second image,
- wherein determination of the position information in the first overlap region (6, 6') is based on the correspondence analysis, the produced first virtual image and the produced second virtual image and on the position of the first camera (1R) in relation to the second camera (1L).

7. Apparatus according to one of the preceding claims, **characterized in that** the evaluation unit is set up to supplement or combine the determined position information with the results from other object-position capture devices.

8. Apparatus according to one of the preceding claims, **characterized in that** the evaluation unit (11) is set up to calculate a relative velocity of the object in relation to the vehicle (10) from a sequence of ascertained positions of the object and in particular to extrapolate an expected position of the object by way of the relative velocity.

9. Apparatus according to one of the preceding claims, **characterized in that** the warning
- is a rear-impact collision warning, wherein the predetermined warning region is located behind or in front of the vehicle (10), and/or
- is a blind spot warning, wherein the predetermined warning region is located in a blind spot of the vehicle (10), and/or
- is a lateral collision warning, wherein the predetermined warning region is located on a side next to the vehicle (10).

10. Method for producing a warning, comprising the steps of:
- capturing a first image of a vehicle environment of a vehicle (10) from a first camera perspective using a first camera (1R),
- capturing a second image of the vehicle environment of the vehicle (10) from a second camera perspective using a second camera (1L),
- capturing at least a third image of the vehicle environment of the vehicle (10) from a third camera perspective using at least one third camera (1H, 1F), wherein the third camera (1H, 1F) is provided as a separate camera,
- wherein the first camera (1R) and the second camera (1L) are two separate cameras which are arranged at external positions of the vehicle (10) at a distance from one another in the longitudinal direction (L) or the transverse direction (Q) of the vehicle (10),
- wherein the first image, the second image and the third image overlap in a first overlap region (6, 6'),
- determining position information, which is a position of an object or an expected position of the object in relation to the vehicle (10), in the first overlap region (6, 6'), and
- outputting a warning if the position information is within a predetermined warning region in relation to the vehicle (10),
**characterized in that**
- determining the position information is based on the first image, the second image and the third image.

## Revendications

1. Véhicule équipé d'un dispositif destiné à générer un avertissement, comprenant :
- une première caméra (1R) servant à capturer une première image d'un environnement de véhicule d'un véhicule (10) depuis une première perspective de caméra,
- une deuxième caméra (1L) servant à capturer une deuxième image de l'environnement de véhicule du véhicule (10) depuis une deuxième perspective de caméra,
- au moins une troisième caméra (1H, 1F) servant à capturer une troisième image de l'environnement de véhicule du véhicule (10) depuis une troisième perspective de caméra, la troisième caméra (1H, 1F) étant présente sous la forme d'une caméra séparée,
- la première image, la deuxième image et la troisième image se chevauchant dans une première zone de chevauchement (6, 6'), et
- une unité d'avertissement (12) qui est conçue pour délivrer un avertissement dans le cas où une information de position, laquelle est une position d'un objet ou une position à attendre de l'objet en référence au véhicule (10), se trouve dans une zone d'avertissement prédéfinie en référence au véhicule (10), et
- la première caméra (1R) et la deuxième caméra (1L) sont des caméras séparées disposées au niveau de positions extérieures du véhicule (10), lesquelles sont disposées espacées l'une de l'autre dans le sens longitudinal ou le sens transversal du véhicule (10), **caractérisé en ce que**
- il existe une unité d'interprétation (11) qui est conçue pour déterminer l'information de position dans la première zone de chevauchement en se basant sur la première image, la deuxième image et la troisième image et la retransmettre à l'unité d'avertissement.

2. Dispositif selon l'une des revendications précédentes, **caractérisé en ce que** la première caméra et la deuxième caméra (IL, 1R) sont disposées sur une ligne (40, 41) commune, orientée parallèlement à la direction longitudinale (L) ou à la direction transversale (Q) du véhicule (10).

3. Dispositif selon la revendication 2, **caractérisé en ce que** la première caméra et la deuxième caméra (IL, 1R) présentent un écart maximal entre elles.

4. Dispositif selon la revendication 1, **caractérisé en ce que** le dispositif comprend en outre une unité de sélection (13) qui est conçue pour reconnaître une situation de conduite actuelle et sélectionner au moins une troisième caméra (1H, 1F) lorsqu'il se produit une situation de conduite prédéfinie.

5. Dispositif selon l'une des revendications précédentes, **caractérisé en ce que** la première caméra et la deuxième caméra (1R, 1L) sont disposées respectivement dans un rétroviseur extérieur (7, 8) du véhicule (10).

6. Dispositif selon l'une des revendications précédentes, **caractérisé en ce que** la première caméra (1R) possède un premier axe optique (2R) et la deuxième caméra (1L) un deuxième axe optique (2L), les premier et deuxième axes optiques (2R, 2L) étant orientés dans des directions différentes, et l'unité d'interprétation est configurée pour :
- définir une première perspective virtuelle de caméra pour la première caméra (1R) à travers un premier axe optique virtuel (4), dont la position est différente de celle du premier axe optique (2R), et une deuxième perspective virtuelle de caméra pour la deuxième caméra (1L) à travers un deuxième axe optique virtuel (5), dont la position est différente de celle du deuxième axe optique (2L),
- calculer une première image virtuelle de la première zone de chevauchement (6, 6') dans la première perspective virtuelle de caméra à partir de la première image et calculer une deuxième image virtuelle de la première zone de chevauchement (6, 6') dans la deuxième perspective virtuelle de caméra à partir de la deuxième image, et
- effectuer une analyse de correspondance en vue d'établir une relation, notamment une relation dans l'espace, entre un objet dans la première image virtuelle générée et la deuxième image virtuelle générée,
- la détermination de l'information de position dans la première zone de chevauchement (6, 6') étant effectuée en se basant sur l'analyse de correspondance, la première image virtuelle générée et la deuxième image virtuelle générée ainsi que la position de la première caméra (1R) en référence à la deuxième caméra (1L).

7. Dispositif selon l'une des revendications précédentes, **caractérisé en ce que** l'unité d'interprétation est conçue pour compléter ou pour combiner l'information de position déterminée avec les résultats d'autres dispositifs de détection de position d'objet.

8. Dispositif selon l'une des revendications précédentes, **caractérisé en ce que** l'unité d'interprétation (11) est conçue pour calculer une vitesse relative de l'objet en référence au véhicule (10) à partir d'une séquence de positions déterminées de l'objet et notamment pour extrapoler une position attendue de l'objet au moyen de la vitesse relative.

9. Dispositif selon l'une des revendications précédentes, **caractérisé en ce que** l'avertissement
- est un avertissement de collision, la zone d'avertissement prédéfinie se trouvant derrière ou devant le véhicule (10), et/ou
- un avertissement d'angle mort, la zone d'avertissement prédéfinie se trouvant dans un angle mort du véhicule (10), et/ou
- un avertissement de collision latérale, la zone d'avertissement prédéfinie se trouvant latéralement à côté du véhicule (10).

10. Procédé pour générer un avertissement, comprenant les étapes suivantes :
- capture d'une première image d'un environnement de véhicule d'un véhicule (10) depuis une première perspective de caméra par une première caméra (1R),
- capture d'une deuxième image de l'environnement de véhicule du véhicule (10) depuis une deuxième perspective de caméra par une deuxième caméra (1L),
- capture d'au moins une troisième image de l'environnement de véhicule du véhicule (10) depuis une troisième perspective de caméra par au moins une troisième caméra (1H, 1F), la troisième caméra (1H, 1F) étant présente sous la forme d'une caméra séparée,
- la première caméra (1R) et la deuxième caméra (1L) étant des caméras séparées disposées au niveau de positions extérieures du véhicule (10), lesquelles sont disposées espacées l'une de l'autre dans le sens longitudinal (L) ou le sens transversal (Q) du véhicule (10),
- la première image, la deuxième image et la troisième image se chevauchant dans une première zone de chevauchement (6, 6'),
- détermination d'une information de position, laquelle est une position d'un objet ou une position à attendre de l'objet en référence au véhicule (10), dans la première zone de chevauchement (6, 6'), et
- délivrance d'un avertissement dans le cas où l'information de position se trouve dans une zone d'avertissement prédéfinie en référence au véhicule (10)
**caractérisé en ce que**
- la détermination de l'information de position est effectuée en se basant sur la première image, la deuxième image et la troisième image.
